(19) Europäisches Patentamt
European Patent Office
Office européen des brevets

(11)  **EP 2 929 610 B1**

(12)  **EUROPÄISCHE PATENTSCHRIFT**

(45) Veröffentlichungstag und Bekanntmachung des Hinweises auf die Patenterteilung:
**24.07.2019   Patentblatt 2019/30**

(51) Int Cl.:
**H02J 3/06** *(2006.01)*      **G06Q 50/06** *(2012.01)*
**H02J 3/00** *(2006.01)*      **H02J 13/00** *(2006.01)*

(21) Anmeldenummer: **13702793.4**

(22) Anmeldetag: **30.01.2013**

(86) Internationale Anmeldenummer:
**PCT/EP2013/051752**

(87) Internationale Veröffentlichungsnummer:
**WO 2014/117826 (07.08.2014 Gazette 2014/32)**

(54)  **ENERGIEVERTEILNETZ UND VERFAHREN ZU DESSEN BETRIEB**

ENERGY DISTRIBUTION GRID AND METHOD FOR OPERATION THEREOF

RÉSEAU DE DISTRIBUTION D'ÉNERGIE ET PROCÉDÉ PERMETTANT DE FAIRE FONCTIONNER LEDIT RÉSEAU DE DISTRIBUTION D'ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.10.2015   Patentblatt 2015/42**

(73) Patentinhaber: **Siemens Aktiengesellschaft 80333 München (DE)**

(72) Erfinder: **DZAFIC, Izudin 71000 Sarajevo (BA)**

(56) Entgegenhaltungen:
**US-A- 6 018 449       US-A1- 2012 029 720
US-A1- 2012 143 385**

EP 2 929 610 B1

**Beschreibung**

Die Erfindung bezieht sich auf ein Verfahren zum Betreiben eines Energieverteilnetzes, bei dem Energie durch Unterstationen hindurch in Teilnetze gespeist wird und die Verteilung der Energie mit einer den Unterstationen übergeordneten Zentraleinrichtung überwacht wird.

Energieverteilnetze werden heutzutage üblicherweise zentral überwacht und gesteuert. Die zum Überwachen und Steuern üblichen Zentraleinrichtungen benötigen eine Vielzahl an Daten, um einen sicheren Betrieb des Energieverteilnetzes sicherzustellen. Dementsprechend aufwändig ist es für die Zentraleinrichtungen, eine Optimierung des Betriebs des gesamten Energieverteilnetzes vorzunehmen und beispielsweise eine vorteilhafte Umkonfigurierung des Energieverteilnetzes rasch zu erkennen, wenn sich die Betriebssituation plötzlich ändert.

Ein gattungsgemäßes Verfahren zum Betreiben eines Energieverteilnetzes ist aus der Druckschrift US 2012/029720 A1 bekannt.

Ferner sind die Druckschriften US 2012/143385 A1 und US 6018449 A bekannt, die sich mit Verfahren zum Betreiben von Energieverteilnetzen befassen.

Der Erfindung liegt daher die Aufgabe zugrunde, ein Verfahren zum Betreiben eines Energieverteilnetzes anzugeben, mit dem sich ein sicherer Betrieb und ein möglichst guter Gesamtzustand des Energieverteilnetzes erreichen lassen.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass mindestens eine der Unterstationen in einem Optimierungsmodus betrieben wird, in dem sie zur Optimierung des Betriebs des gesamten Energieverteilnetzes eine Veränderungsaktion, die die Unterstation in dem ihr zugeordneten Teilnetz vornehmen könnte, auf deren Wirkung auf den Betriebszustand des gesamten Energieverteilnetzes untersucht, wobei die im Optimierungsmodus betriebene Unterstation von der oder den von der Veränderungsaktion be-troffenen oder von allen Unterstationen jeweils einen unterstationsindividuellen Sensibilitätswert empfängt, der die Änderung des lokalen Betriebszustands in dem der jeweiligen anderen Unterstation zugeordneten Teilnetz angibt, falls die Veränderungsaktion in dem Teilnetz der im Optimierungsmodus betriebenen Unterstation ausgeführt werden würde, und die im Optimierungsmodus betriebene Unterstation anhand der empfangenen Sensibilitätswerte prüft, ob die Veränderungsaktion für das gesamte Energieverteilnetz zu einer Verbesserung des Betriebszustandes führen würde.

Ein wesentlicher Vorteil des erfindungsgemäßen Verfahrens ist darin zu sehen, dass sich das Energieverteilnetz selbsttätig umkonfigurieren kann. Aufgrund der erfindungsgemäß vorgesehenen Eignung zumindest einer der Unterstationen, selbsttätig prüfen zu können, ob eine Veränderung der Netzkonfiguration von Vorteil ist, kann die Zentraleinrichtung entlastet werden und eine optimale Netzkonfiguration schneller und einfacher erreicht werden, als dies im Falle einer zentralen Optimierung allein durch die Zentraleinrichtung möglich wäre. Ein Einbeziehen einer Zentraleinrichtung kann zwar zusätzlich vorgesehen sein, ist jedoch bei dem erfindungsgemäßen Energieverteilnetz nicht zwingend nötig, da die Unterstationen - bzw. zumindest eine von ihnen - ihre Ressourcen zur Versorgung von Teilnetzen oder Teilabschnitten selbst überprüfen und eine Neukonfiguration selbst vornehmen können. Auch lässt sich die Menge der an eine Zentraleinrichtung zu übermittelnden Daten und damit weitere Fehlergefahren reduzieren.

Damit die im Optimierungsmodus betriebene Unterstation einfach und schnell feststellen kann, ob eine Veränderungsaktion einen positiven Effekt hat, wird es als vorteilhaft angesehen, wenn sie die unterstationsindividuellen Sensibilitätswerte und einen eigenen Sensibilitätswert, der den Einfluss der Veränderungsaktion auf das eigene Teilnetz beschreibt, unter Bildung eines Veränderungswertes V aufsummiert gemäß:

$$V = \sum_{i=1}^{n} k_i \frac{\partial Fli}{\partial C} \Delta C$$

wobei n die Anzahl der Unterstationen, $\delta Fli/\delta C$ einen auf das Maß der Veränderung bezogenen unterstationsindividuellen Sensibilitätswert der i-ten Unterstation, $\Delta C$ das Maß der Veränderung der Veränderungsaktion und $k_i$ einen unterstationsindividuellen Gewichtungswert beschreibt, der den Einfluss der i-ten Unterstation auf den Gesamtzustandswert angibt. Der Veränderungswert V ist ein Maß dafür, ob und in welchem Maße $\Delta C$ sich die Veränderungsaktion für das Energieverteilnetz insgesamt lohnt.

Alternativ oder zusätzlich kann die im Optimierungsmodus betriebene Unterstation die unterstationsindividuellen Sensibilitätswerte und einen eigenen Sensibilitätswert, der den Einfluss der Veränderungsaktion auf das eigene Teilnetz beschreibt, zur Bildung eines den Betriebszustand des gesamten Energieverteilnetzes beschreibenden Gesamtzustandswerts heranziehen gemäß:

$$Fg = Fl + \sum_{i=1}^{n} k_i \frac{\partial Fli}{\partial C} \Delta C$$

wobei Fg den Gesamtzustandswert nach der Durchführung der Veränderungsaktion und Fl den Gesamtzustandswert vor der Durchführung der Veränderungsaktion angibt. Durch einen Vergleich der beiden Gesamtzustandswerte Fg und Fl kann dann festgestellt werden, ob und in welchem Maße sich die Veränderungsaktion für das Energieverteilnetz insgesamt lohnt.

Die unterstationsindividuellen Sensibilitätswerte können beispielsweise Werte sein,

- die das Verhältnis zwischen der Energie, die von den an das Teilnetz der jeweiligen Unterstation angeschlossenen Verbrauchern verbraucht wird, und der im jeweiligen Teilnetz verlorenen Energie angeben oder
- die die Schwankungsbreite der Spannung in dem der jeweiligen Unterstation zugeordneten Teilnetz angeben oder
- die die Schwankungsbreite der Frequenz der Spannung in dem der jeweiligen Unterstation zugeordneten Teilnetz angeben.

Die im Optimierungsmodus betriebene Unterstation kann die Veränderungsaktion unmittelbar ausführen, falls sie feststellt, dass die Veränderungsaktion für das gesamte Energieverteilnetz zu einer Verbesserung des Betriebszustandes führt.

Alternativ kann vorgesehen werden, dass die im Optimierungsmodus betriebene Unterstation - falls sie feststellt, dass die Veränderungsaktion für das gesamte Energieverteilnetz zu einer Verbesserung des Betriebszustandes führen würde - eine Anfrage an die übergeordnete Zentraleinrichtung sendet, mit der angefragt wird, ob die Veränderungsaktion ausgeführt werden soll.

Vorzugsweise wird nach Empfang der Anfrage die übergeordnete Zentraleinrichtung anhand weiterer, der anfragenden Unterstation nicht zur Verfügung stehender Daten prüfen, ob die Veränderungsaktion ausgeführt werden soll, und ein Bestätigungssignal an die anfragende Unterstation schicken, falls dies der Fall ist.

Bezüglich des Verfahrens insgesamt wird es als besonders vorteilhaft angesehen, wenn die im Optimierungsmodus betriebene Unterstation zu der oder den von der Veränderungsaktion betroffenen oder zu allen Unterstationen ein Anfragesignal übersendet, mit dem die Veränderungsaktion, die in dem Teilnetz der im Optimierungsmodus betriebenen Unterstation ausgeführt werden soll, definiert wird, die Unterstationen jeweils prüfen, welchen Einfluss die geplante Veränderungsaktion auf das eigene Teilnetz haben würde, einen diesen Einfluss beschreibenden unterstationsindividuellen Sensibilitätswert erzeugen und den unterstationsindividuellen Sensibilitätswert an die im Optimierungsmodus betriebene Unterstation senden, und die im Optimierungsmodus betriebene Unterstation die unterstationsindividuellen Sensibilitätswerte von den übrigen Unterstationen empfängt und mit diesen einen den Betriebszustand des gesamten Energieverteilnetzes beschreibenden Gesamtzustandswert erzeugt.

Als Gesamtzustandswert des gesamten Energieverteilnetzes wird vorzugsweise ein Wert gebildet, der das Verhältnis zwischen der von den an das Energieverteilnetz angeschlossenen Verbrauchern verbrauchten Energie und der im Energieverteilnetz verlorenen Energie oder die Schwankungsbreite der Spannung im Energieverteilnetz oder die Schwankungsbreite der Frequenz der Spannung im Energieverteilnetz angibt.

Zur Bildung der unterstationsindividuellen Sensibilitätswerte werden von den Unterstationen vorzugsweise Last- und/oder Topologiedaten herangezogen, die sich auf das jeweils versorgte Teilnetz oder das gesamte Energieverteilnetz beziehen. Die Last- und/oder Topologiedaten tauschen die Unterstationen vorzugsweise untereinander und/oder mit der Zentraleinrichtung aus.

Die Erfindung bezieht sich außerdem auf ein Energieverteilnetz nach Anspruch 10, wobei mindestens zwei Unterstationen, die jeweils ein Teilnetz des Energieverteilnetzes mit Energie versorgen können, und mit einer den Unterstationen übergeordneten Zentraleinrichtung.

Erfindungsgemäß ist diesbezüglich vorgesehen, dass mindestens eine der Unterstationen geeignet ist, in einem Optimierungsmodus betrieben zu werden, in dem sie zur Optimierung des Betriebs des gesamten Energieverteilnetzes eine Veränderungsaktion, die die Unterstation in dem ihr zugeordneten Teilnetz vornehmen könnte, auf deren Wirkung auf den Betriebszustand des gesamten Energieverteilnetzes untersucht, indem sie von allen oder zumindest von der oder den von der Veränderungsaktion betroffenen Unterstationen jeweils einen unterstationsindividuellen Sensibilitätswert empfängt, der die Änderung des lokalen Betriebszustands in dem der jeweiligen anderen Unterstation zugeordneten Teilnetz angibt, falls die Veränderungsaktion in dem Teilnetz der im Optimierungsmodus betriebenen Unterstation ausgeführt werden würde, und anhand der empfangenen Sensibilitätswerte prüft, ob die Veränderungsaktion für das gesamte Energieverteilnetz zu einer Verbesserung des Betriebszustandes führen würde.

Bezüglich der Vorteile des erfindungsgemäßen Energieverteilnetzes sei auf die oben genannten Vorteile des erfindungsgemäßen Verfahrens verwiesen, da die Vorteile des erfindungsgemäßen Energieverteilnetzes denen des erfindungsgemäßen Verfahrens im Wesentlichen entsprechen.

Um ein möglichst schnelles Umkonfigurieren des Energieverteilnetzes zu ermöglichen, wird es als vorteilhaft angesehen, wenn die Unterstationen jeweils eine Kommunikationseinrichtung aufweisen und über diese Kommunikationseinrichtung miteinander eine Kommunikationsverbindung aufbauen können, sei es unmittelbar miteinander oder unter Mitwirkung einer übergeordneten Zentraleinrichtung.

Eine unmittelbare Datenübertragung zwischen den Unterstationen wird jedoch als vorteilhaft angesehen, weil sie die Übertragungsgeschwindigkeit der Daten erhöht und Eingriffe in die Energieverteilung innerhalb des Energieverteilnetzes ausschließlich durch Komponenten der Unterstationsebene ermöglicht, also ohne Mitwirkung einer übergeordneten Zentraleinrichtung.

Die zwischen den Unterstationen übermittelten Daten können zusätzlich auch an die übergeordnete Zentraleinrichtung übermittelt werden, um die jeweils herrschende Konfiguration des Energieverteilnetzes auch zentral bewerten und ggf. steuern zu können.

Die Erfindung bezieht sich außerdem auf eine Unterstation für ein Energieverteilnetz, wie sie oben beschrieben worden ist.

Erfindungsgemäß ist vorgesehen, dass die Unterstation eine Recheneinrichtung aufweist, die derart programmiert ist, dass die Unterstation in einem Optimierungsmodus betrieben werden kann, in dem sie zur Optimierung des Betriebs des gesamten Energieverteilnetzes eine Veränderungsaktion, die die Unterstation in dem ihr zugeordneten Teilnetz vornehmen könnte, auf deren Wirkung auf den Betriebszustand des gesamten Energieverteilnetzes untersucht, indem sie von allen oder zumindest von der oder den von der Veränderungsaktion betroffenen Unterstationen jeweils einen unterstationsindividuellen Sensibilitätswert empfängt, der die Änderung des lokalen Betriebszustands in dem der jeweiligen anderen Unterstation zugeordneten Teilnetz angibt, falls die Veränderungsaktion in dem Teilnetz der im Optimierungsmodus betriebenen Unterstation ausgeführt werden würde, und anhand der empfangenen Sensibilitätswerte prüft, ob die Veränderungsaktion für das gesamte Energieverteilnetz zu einer Verbesserung des Betriebszustandes führen würde.

Bezüglich der Vorteile der erfindungsgemäßen Unterstation sei auf die oben genannten Vorteile des erfindungsgemäßen Verfahrens verwiesen, da die Vorteile des erfindungsgemäßen Verfahrens denen der erfindungsgemäßen Unterstation im Wesentlichen entsprechen.

Die Unterstationen weisen vorzugsweise jeweils eine Kommunikationseinrichtung und eine damit verbundene Recheneinrichtung auf.

Die Erfindung bezieht sich außerdem auf eine Zentraleinrichtung für ein Energieverteilnetz, wie sie oben beschrieben worden ist.

Erfindungsgemäß ist diesbezüglich vorgesehen, dass die Zentraleinrichtung eine Recheneinrichtung aufweist, die derart programmiert ist, dass die Zentraleinrichtung nach Empfang einer Anfrage einer Unterstation anhand weiterer, der anfragenden Unterstation nicht zur Verfügung stehender Daten prüft, ob eine in der Anfrage definierte Veränderungsaktion ausgeführt werden soll und ein Bestätigungssignal an die anfragende Unterstation schickt, falls eine Ausführung erfolgen soll.

Die Erfindung wird nachfolgend anhand von Ausführungsbeispielen näher erläutert; dabei zeigen beispielhaft

Fig. 1-5   ein Energieverteilnetz, anhand dessen ein Ausführungsbeispiel für das erfindungsgemäße Verfahren beispielhaft erläutert wird,

Fig. 6-8   ein Energieverteilnetz, anhand dessen ein weiteres Ausführungsbeispiel für das erfindungsgemäße Verfahren beispielhaft erläutert wird, und

Fig. 9   beispielhaft den Verlauf eines Veränderungswertes über dem Maß der Veränderung einer Veränderungsaktion.

In den Figuren werden der Übersicht halber für identische oder vergleichbare Komponenten stets dieselben Bezugszeichen verwendet.

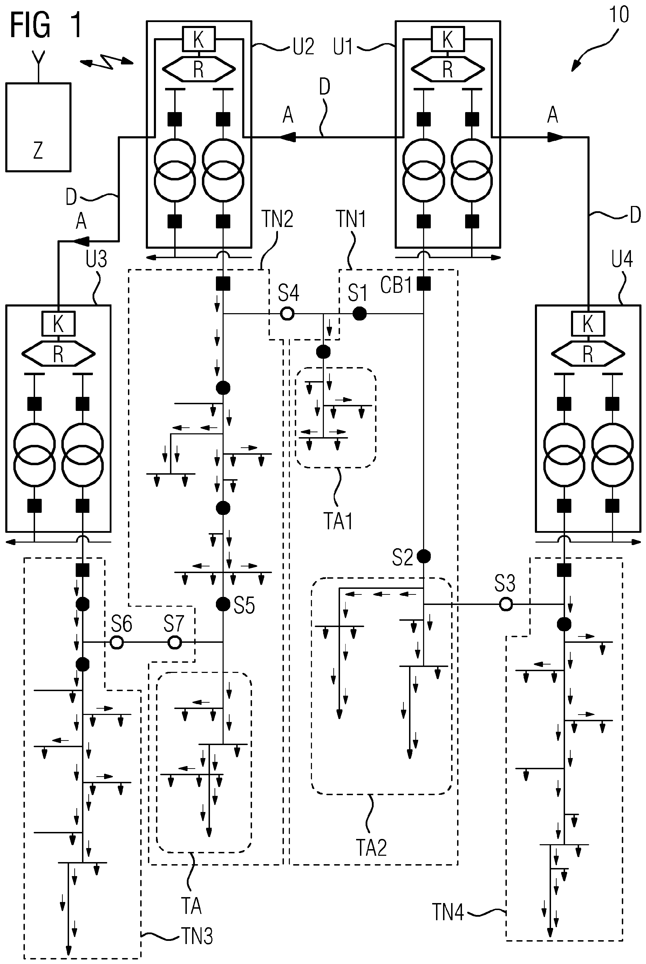

In der Figur 1 sieht man ein Energieverteilnetz 10, von dem in der Figur 1 vier Teilnetze TN1, TN2, TN3 und TN4 dargestellt sind.

Das erste Teilnetz TN1 wird von einer Unterstation U1 mit elektrischer Energie versorgt und weist einen ersten Teilabschnitt TA1 sowie einen zweiten Teilabschnitt TA2 auf. Die beiden Teilabschnitte TA1 und TA2 des ersten Teilnetzes TN1 sind über eingeschaltete Schalter CB1, S1 und S2 elektrisch mit der Unterstation U1 verbunden. Aufgrund des eingeschalteten Zustands (in den Figuren durch schwarze Kreise oder Quadrate dargestellt) der drei Schalter CB1, S1 und S2 kann Energie der Unterstation U1 zu den beiden Teilabschnitten TA1 und TA2 fließen und/oder Energie von der Unterstation U1 aus den Teilabschnitten entnommen werden.

In entsprechender Weise sind die Teilnetze TN2, TN3 und TN4 mit den Unterstationen U2, U3 und U4 verbunden und können über diese mit Energie versorgt werden. Die Teilnetze TN2, TN3 und TN4 oder deren Teilabschnitte stehen u. a. über Schalter S3, S4, S5, S6 und S7 miteinander in Verbindung; in den Figuren sind bei diesen Schaltern geschlossene Schalterzustände durch schwarze Kreise und offene Schalterzustände durch weiße Kreise dargestellt.

Die vier Unterstationen U1, U2, U3 und U4 weisen jeweils eine Kommunikationseinrichtung K auf, die eine unmittelbare Kommunikation mit anderen Unterstationen ermöglicht. Mit den Kommunikationseinrichtungen K steht jeweils eine Recheneinrichtung R in Verbindung, die derart programmiert ist, dass sie die nachfolgend beschriebenen Funktionen ausführen kann. Die vier Unterstationen U1, U2, U3 und U4 stehen über Datenleitungen D miteinander in Verbindung, so dass sie über diese Datenleitungen D Daten unmittelbar miteinander austauschen können. Drahtgebunden oder über Funk stehen die vier Unterstationen U1, U2, U3 und U4 außerdem mit einer Zentraleinrichtung Z in Verbindung.

Die Arbeitsweise des Energieverteilnetzes 10 soll nun nachfolgend anhand eines Ausführungsbeispiels näher erläutert werden. Dabei wird beispielhaft davon ausgegangen, dass die Unterstation U1 in einem Optimierungsmodus betrieben wird, in dem sie zur Optimierung des Betriebs des gesamten Energieverteilnetzes 10 eine Veränderungsaktion, die die Unterstation U1 in dem ihr zugeordneten Teilnetz TN1 vornehmen könnte, auf deren Wirkung auf den Betriebszustand des gesamten Energieverteilnetzes 10 untersucht.

Bei dem in Figur 1 gezeigten Zustand des Energieverteilnetzes 10 versorgt die Unterstation U1 die beiden Teilabschnitte TA1 und TA2 des Teilnetzes TN1 mit Energie. Im Rahmen der Optimierung des Betriebs des gesamten Energieverteilnetzes 10 kann die Unterstation U1 beispielsweise überprüfen, ob eine Umkonfigurierung der Teilnetze bzw. eine Neuzuordnung der Teilabschnitte TA1 bzw. TA2 zu anderen Teilnetzen als dem Teilnetz TN1 eine Verbesserung des Gesamtzustands des Energieverteilnetzes 10 herbeiführen könnte.

Um dies festzustellen, kann die Unterstation U1 beispielsweise zunächst prüfen, ob eine Neuzuordnung des Teilabschnitts TA1 zu dem Teilnetz TN2 der Unterstation U2 eine Verbesserung bewirken würde oder nicht. Eine solche Prüfung kann beispielsweise wie folgt aussehen:

In einem ersten Schritt wird die Unterstation U1 an alle anderen Unterstationen U2, U3 und U4 des Energieverteilnetzes 10 ein Anfragesignal A übersenden, mit dem die geplante Veränderungsaktion, hier also die Neuzuordnung des Teilabschnitts TA1 vom Teilnetz TN1 zum Teilnetz TN2 der Unterstation U2, definiert wird.

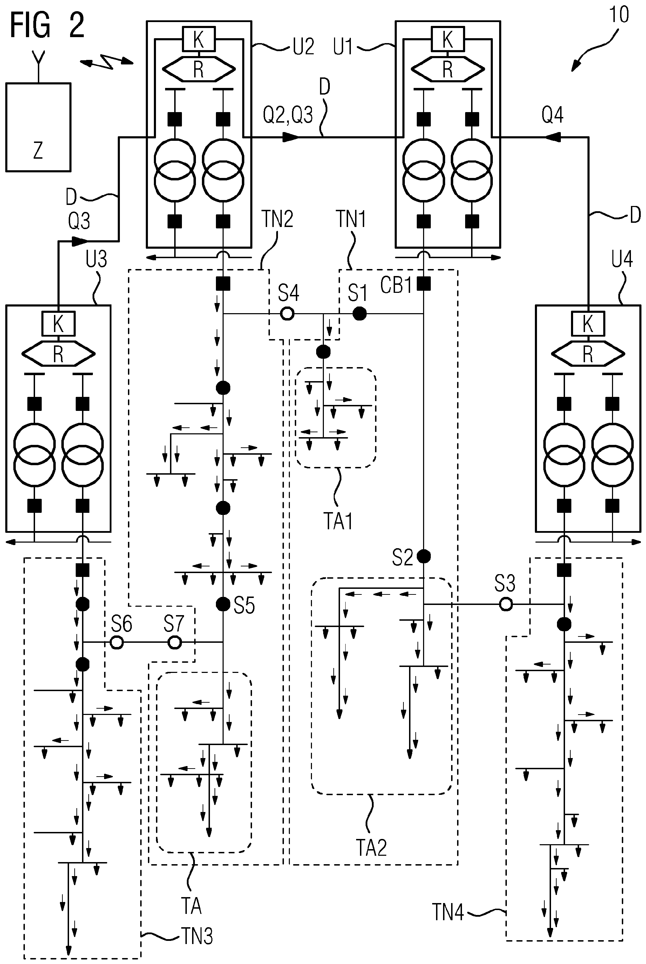

Nach dem Empfang des Anfragesignals A werden die Unterstationen U2, U3 und U4 prüfen, welchen Einfluss die geplante Veränderungsaktion auf das eigene Teilnetz TN2, TN3 bzw. TN4 haben würde. Demgemäß werden sie einen den Einfluss der Neuzuordnung des Teilabschnitts TA1 beschreibenden unterstationsindividuellen Sensibilitätswert Q2, Q3 und Q4 erzeugen und diesen an die im Optimierungsmodus betriebene Unterstation U1 senden (vgl. Figur 2). Hier wird beispielhaft davon ausgegangen, dass ein positiver unterstationsindividueller Sensibilitätswert eine Verbesserung des lokalen Betriebszustands in dem von der jeweiligen Unterstation versorgten Teilnetz und ein negativer unterstationsindividueller Sensibilitätswert eine Verschlechterung des lokalen Betriebszustands in dem von der jeweiligen Unterstation versorgten Teilnetz angibt; diese Zuordnung ist selbstverständlich nur beispielhaft zu verstehen und könnte auch umgekehrt sein.

Zur Bildung der unterstationsindividuellen Sensibilitätswerte Q2, Q3 und Q4 werden von den Unterstationen vorzugsweise Last- und/oder Topologiedaten herangezogen, die sich auf das jeweils versorgte Teilnetz oder das gesamte Energieverteilnetz beziehen. Die Last- und/oder Topologiedaten tauschen die Unterstationen vorzugsweise untereinander aus und/oder erhalten diese von Zentraleinrichtung.

Bei den unterstationsindividuellen Sensibilitätswerten kann es sich beispielsweise um Werte handeln, die das Verhältnis zwischen der von den an das jeweilige Teilnetz angeschlossenen Verbrauchern verbrauchten Energie und der im jeweiligen Teilnetz verlorenen Energie angeben. Alternativ kann es sich um Werte handeln, die die Schwankungsbreite der Spannung im jeweiligen Teilnetz oder die Schwankungsbreite der Frequenz der Spannung im jeweiligen Teilnetz angeben.

Nach dem Empfang der unterstationsindividuellen Sensibilitätswerte Q2, Q3 und Q4 ist die Unterstation U1 in der Lage, zu prüfen, ob die Veränderungsaktion bzw. die Neuzuordnung des Teilabschnitts TA1 für das Energieverteilnetz 10 insgesamt von Vorteil wäre und zu einer Verbesserung des Betriebszustands führen würde. Beispielsweise wird die Unterstation U1 die unterstationsindividuellen Sensibilitätswerte Q2, Q3 und Q4 sowie einen eigenen unterstationsindividuellen Sensibilitätswert Q1, der den Einfluss der Veränderungsaktion auf das von der Unterstation U1 betriebene Teilnetz TN1 beschreibt, gewichtet unter Bildung eines Veränderungswertes V aufsummieren, beispielsweise gemäß

$$V = \sum_{i=1}^{n} k_i Q_i$$

wobei n die Anzahl der Unterstationen (hier n=4), Qi den unterstationsindividuellen Sensibilitätswert der i-ten Unterstation und ki einen unterstationsindividuellen Gewichtungswert beschreibt. Der Gewichtungswert beschreibt den Einfluss der i-ten Unterstation auf den Gesamtzustandswert des gesamten Energieverteilnetzes 10. Im Falle gleich wichtiger Unterstationen bzw. gleich wichtiger Teilnetze wird der Gewichtungswert beispielsweise identisch sein und zum Beispiel jeweils 1 betragen.

Zur Bildung des unterstationsindividuellen Sensibilitätswerts Q1 werden von der Unterstation U1 vorzugsweise Last- und/oder Topologiedaten herangezogen, die sich auf das jeweils versorgte Teilnetz oder das gesamte Energieverteilnetz beziehen. Die Last- und/oder Topologiedaten erhält die Unterstation U1 vorzugsweise von Zentraleinrichtung.

Durch die Summenbildung der unterstationsindividuellen Sensibilitätswerte Q1 bis Q4 lässt sich feststellen, ob sich eine Neuzuordnung des Teilabschnitts TA1 lohnt: Ist der Veränderungswert V positiv, so tritt eine Verbesserung ein und eine Neuzuordnung wäre von Vorteil; ist der Veränderungswert V hingegen Null oder negativ, so tritt keine Verbesserung ein und eine Neuzuordnung hätte keinen Vorteil.

Zusätzlich oder alternativ kann die Unterstation U1 einen den Betriebszustand des gesamten Energieverteilnetzes 10 beschreibenden Gesamtzustandswert Fg bestimmen, indem sie die Aufsummierung der unterstationsindividuellen Sensibilitätswerte unter Berücksichtigung des den Betriebszustand des gesamten Energieverteilnetzes 10 beschreibenden Gesamtzustandswerts Fl vor der Durchführung der Veränderungsaktion berechnet gemäß:

$$Fg = Fl + \sum_{i=1}^{n} k_i Q_i$$

Stellt die Unterstation U1 fest, dass sich der Gesamtzustandswert Fg gegenüber dem Gesamtzustandswert Fl ohne Durchführung der Veränderungsaktion verschlechtert, so wird sie die Durchführung der Veränderungsaktion unterlassen und alternativ andere Maßnahmen prüfen, die eine Verbesserung des Gesamtzustandswerts des Energieverteilnetzes 10 bewirken würden oder alternativ den Optimierungsmodus beenden. Beispielsweise kann die Unterstation U1 prüfen, ob eine Neuzuordnung des Teilabschnitts TA2 des Teilnetzes TN1 zum Teilnetz TN4 der Unterstation U4 vorteilhaft wäre, wie dies im Zusammenhang mit der Neuzuordnung des Teilabschnitts TA1 oben beschrieben wurde.

Stellt die Unterstation U1 hingegen fest, dass eine Neuzuordnung des Teilabschnitts TA1 zum Teilnetz TN2 für den Gesamtzustand des Energieverteilnetzes 10 von Vorteil ist, weil der Gesamtzustandswert Fg größer als der Gesamtzustandswert Fl ist, so wird sie die Umsetzung der Veränderungsaktion veranlassen. Diesbezüglich werden zwei alternative Vorgehensweisen als vorteilhaft angesehen:

Gemäß einer ersten Ausführungsvariante wird die Unterstation U1 die Veränderungsaktion, hier also die Neuzuordnung des Teilabschnitts TA1 zum Teilnetz TN2, unmittelbar ausführen, sobald sie festgestellt hat, dass die Veränderungsaktion für das gesamte Energieverteilnetz 10 zu einer Verbesserung des Betriebszustands führt.

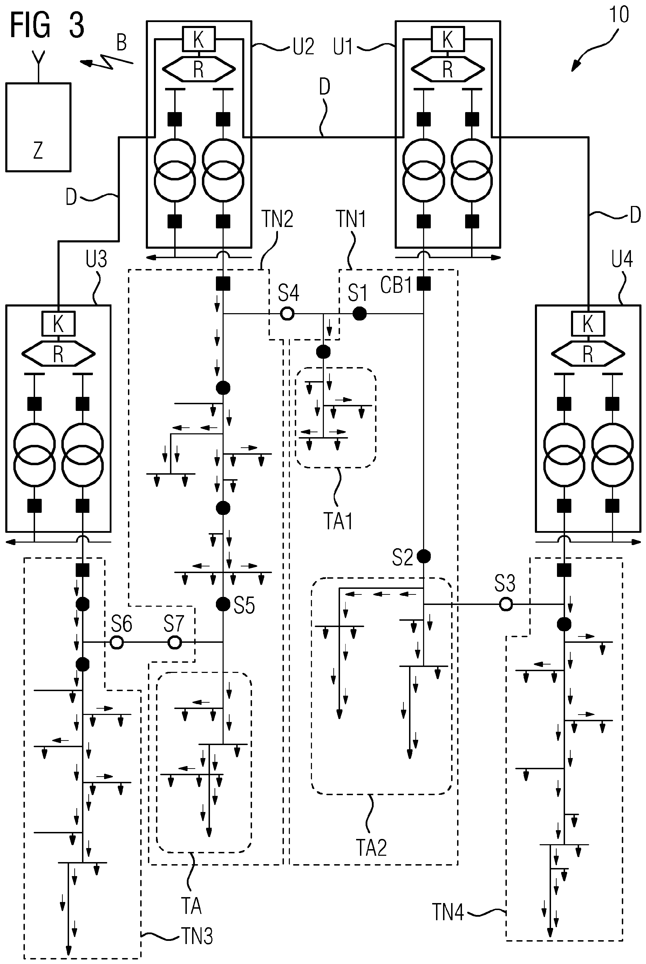

Gemäß einer zweiten Ausführungsvariante kann die Unterstation U1 zunächst eine Anfrage B an die übergeordnete Zentraleinrichtung Z senden, mit der angefragt wird, ob die Veränderungsaktion ausgeführt werden soll oder nicht (vgl. Figur 3). Nach Empfang der Anfrage B wird die übergeordnete Zentraleinrichtung Z prüfen, ob die Veränderungsaktion ausgeführt werden soll. Bei der Prüfung dieser Frage wird die Zentraleinrichtung Z vorzugsweise weitere Daten, die der anfragenden Unterstation U1 nicht zur Verfügung stehen, heranziehen.

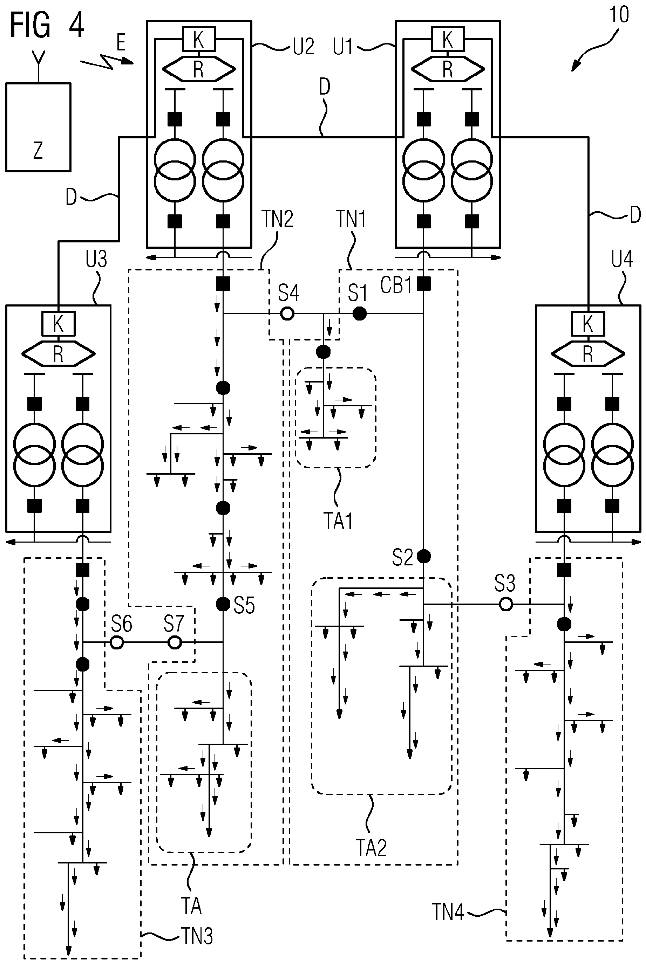

Falls die Veränderungsaktion durchgeführt werden soll, wird die Zentraleinrichtung Z ein Bestätigungssignal E an die anfragende Unterstation U1 schicken, mit dem die Umsetzung der Veränderungsaktion freigegeben wird (vgl. Figur 4). Andernfalls wird die Zentraleinrichtung Z ein Signal senden, mit dem die Umsetzung verboten wird.

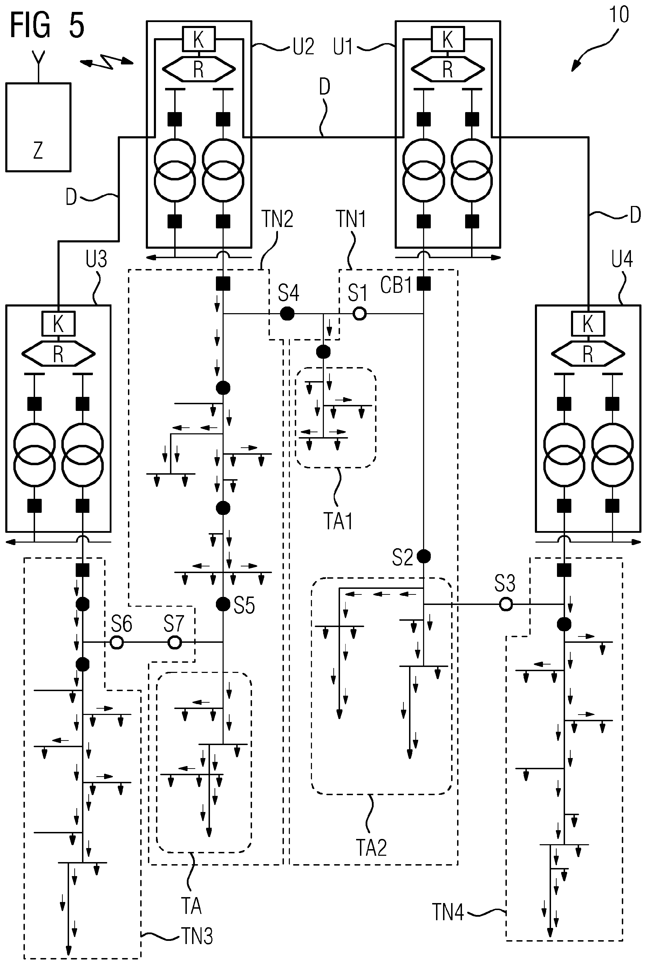

Nachdem die Unterstation U1 das Bestätigungssignal E erhalten hat, wird sie den Schalter S1 im Teilnetz TN1 ausschalten und die Unterstation U2 auffordern, den Schalter S4 zu schließen, damit die Versorgung des Teilabschnitts TA1 durch die Unterstation U2 fortgesetzt werden kann. Das Energieverteilnetz 10 nach der Zuordnung des Teilabschnitts TA1 zum Teilnetz TN2 ist in der Figur 5 gezeigt.

Bei dem Ausführungsbeispiel gemäß den Figuren 1 bis 5 wurde beispielhaft davon ausgegangen, dass eine Veränderungsaktion in einer vollständigen Neuzuordnung von Teilabschnitten von einer Unterstation zu einer anderen Unterstation besteht. Alternativ können auch andere Veränderungsaktionen in der beschriebenen Weise quantitativ erfasst und ausgewertet werden. Beispielsweise könnte der Teilabschnitt TA1 des Teilnetzes TN1 auch anteilig von den beiden Unterstationen U1 und U2 mit Energie versorgt werden, anstatt diesen vollständig der Unterstation U2 zuzuordnen.

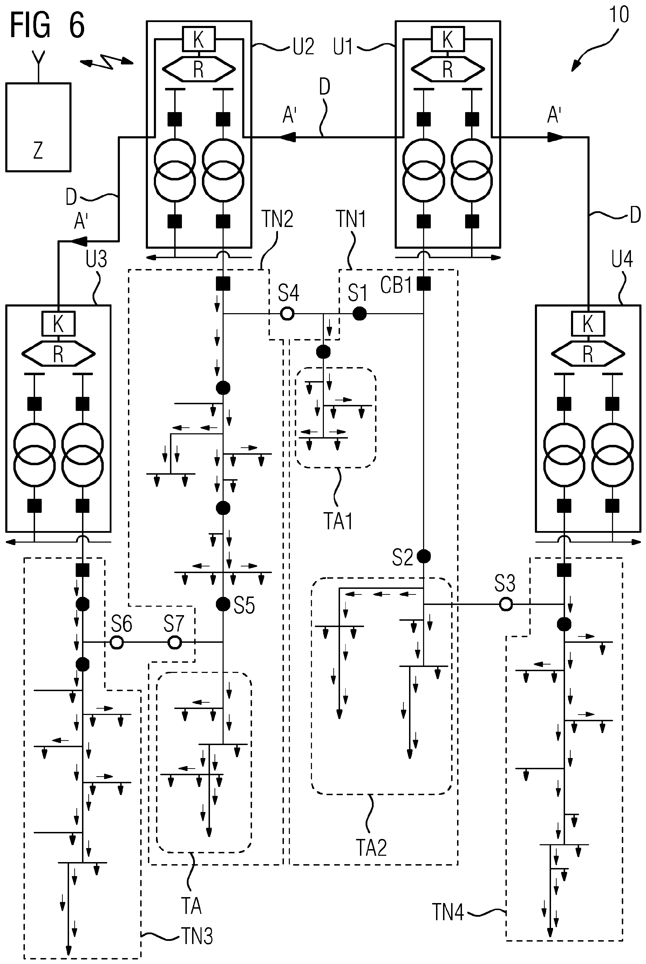

Dies soll nachfolgend unter Bezugnahme auf die Figuren 6-8 anhand eines weiteren Ausführungsbeispiels näher erläutert werden, bei dem $\Delta C$ das Verhältnis angibt, mit dem die Versorgung des Teilabschnitts TA1 anteilig von der Unterstation U2 erfolgen würde, falls es im Rahmen der Veränderungsaktion zu einer teilweisen Umkonfigurierung kommt. Der Wert $\Delta C$ ist somit ein Maß für den Umfang der Veränderungsaktion, die die Unterstation U1 analysiert. Ein Wert $\Delta C=1$ würde dabei einer vollständigen Neuzuordnung des Teilabschnitts TA1 zu der Unterstation U2 entsprechen, wie dies oben im Zusammenhang mit den Figuren 1-5 diskutiert wurde; ein Wert $\Delta C = 0{,}5$ würde bedeuten, dass die Versorgung des Teilabschnitts TA1 je hälftig von beiden Unterstation U1 und U2 durchgeführt werden würde, usw.

Wie die Figur 6 zeigt, wird die Unterstation U1 in einem ersten Schritt an alle anderen Unterstationen U2, U3 und U4 des Energieverteilnetzes 10 ein Anfragesignal A' übersenden, mit dem die geplante Veränderungsaktion, hier also eine anteilige Neuzuordnung des Teilabschnitts TA1 vom Teilnetz TN1 zum Teilnetz TN2 der Unterstation U2, definiert wird.

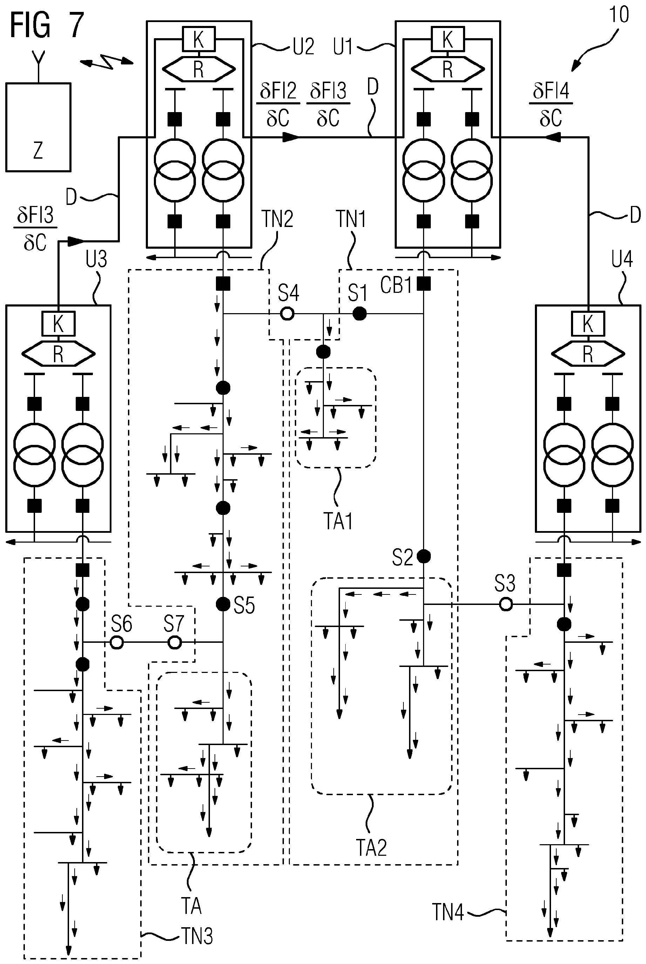

Nach dem Empfang des Anfragesignals A' werden die Unterstationen U2 bis U4 prüfen, welchen Einfluss die geplante Veränderungsaktion auf das eigene Teilnetz TN2, TN3 bzw. TN4 haben würde. Demgemäß werden sie einen auf den Umfang $\Delta C$ der Veränderung bezogenen Sensibilitätswert $\partial Fli/\partial C$ erzeugen und diesen an die im Optimierungsmodus betriebene Unterstation U1 senden (vgl. Figur 7). Der unterstationsindividuelle Sensibilitätswert $\partial Fli/\partial C$ gibt an, welchen Einfluss eine Neuzuordnung des Teilabschnitts TA1 haben würde, und zwar bezogen auf das Maß der Veränderung $\Delta C$. Im Unterschied zu dem Ausführungsbeispiel gemäß den Figuren 1 bis 5 werden bei dem Ausführungsbeispiel gemäß den Figuren 6-8 auf das Maß der Veränderung bezogene Sensibilitätswerte gebildet und nicht absolute Sensibilitätswerte.

Durch Multiplikation des das jeweilige Maß der Veränderung angebenden Wertes $\Delta C$ mit dem jeweiligen auf das Maß bzw. den Umfang $\Delta C$ der Veränderung bezogenen Sensibilitätswert $\partial Fli/\partial C$ erhält man den resultierenden absoluten unterstationsindividuellen Sensibilitätswert $\frac{\partial Fli}{\partial C}\Delta C$, der den Einfluss der teilweisen Neuzuordnung des Teilabschnitts TA1 quantitativ angibt. Für einen Wert $\Delta C=1$ würde man die absoluten unterstationsindividuellen Sensibilitätswerte Qi gemäß dem anhand der Figuren 1-5 erläuterten Ausführungsbeispiel erhalten.

Nach dem Empfang der auf das Maß $\Delta C$ der Veränderung bezogenen Sensibilitätswerte $\partial Fli/\partial C$ ist die Unterstation U1 in der Lage, zu prüfen, ob die Veränderungsaktion bzw. die teilweise Neuzuordnung des Teilabschnitts TA1 für das Energieverteilnetz 10 insgesamt von Vorteil wäre und zu einer Verbesserung des Betriebszustands führen würde. Beispielsweise wird die Unterstation U1 die auf den Umfang ΔC der Veränderung bezogenen Sensibilitätswerte ∂Fl2/∂C, ∂Fl3/∂C und ∂Fl4/∂C sowie einen eigenen (auf das Maß bzw. den Umfang der Veränderung) bezogenen unterstationsindividuellen Sensibilitätswert ∂Fl1/∂C, der den Einfluss der Veränderungsaktion auf das von der Unterstation U1 betriebene Teilnetz TN1 beschreibt, gewichtet unter Bildung eines Veränderungswertes V aufsummieren, beispielsweise gemäß

$$V = + \sum_{i=1}^{n} k_i \frac{\partial Fli}{\partial C} \Delta C$$

wobei n die Anzahl der Unterstationen (hier n=4), ∂Fli/∂C den auf den Umfang der Veränderung bezogenen unterstationsindividuellen Sensibilitätswert der i-ten Unterstation, ΔC das Maß der Veränderung und ki einen unterstationsindividuellen Gewichtungswert beschreibt, der den Einfluss der i-ten Unterstation auf den Gesamtzustandswert des gesamten Energieverteilnetzes 10 angibt.

Durch die Summenbildung lässt sich feststellen, ob sich eine teilweise Neuzuordnung des Teilabschnitts TA1 lohnt: Ist der Veränderungswert V positiv, so tritt eine Verbesserung ein und eine Neuzuordnung wäre von Vorteil; ist der Veränderungswert V hingegen Null oder negativ, so tritt keine Verbesserung ein und eine Neuzuordnung hätte keinen Vorteil.

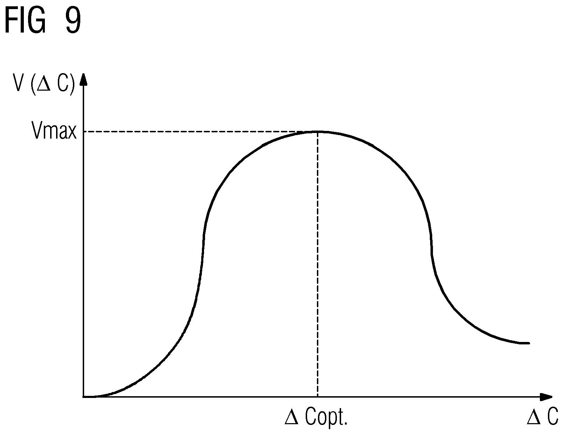

Darüber hinaus lässt sich ein optimaler Wert für ΔC bestimmen und somit ermitteln, wie die Verteilung der Energieversorgung des Teilabschnitts TA1 auf die beiden Unterstationen U1 und U2 optimal wäre. Der optimale Wert für ΔC ist derjenige Wert, für den V maximal bzw. optimal wird. Figur 9 zeigt beispielhaft einen Verlauf des Veränderungswertes V über dem Maß der Veränderung ΔC. Man erkennt, dass bei dem Beispiel gemäß Figur 9 der Veränderungswert V bei ΔC = ΔCopt maximal wird und den Wert Vmax annimmt; dies bedeutet, dass der Betriebszustand des gesamten Energieverteilnetzes 10 optimal wird.

Zusätzlich oder alternativ kann die Unterstation U1 einen den Betriebszustand des gesamten Energieverteilnetzes 10 beschreibenden Gesamtzustandswert Fg bestimmen, indem sie die Aufsummierung der unterstationsindividuellen Sensibilitätswerte unter Berücksichtigung des den Betriebszustand des gesamten Energieverteilnetzes 10 beschreibenden Gesamtzustandswerts Fl vor der Durchführung der Veränderungsaktion berechnet gemäß:

$$Fg = Fl + \sum_{i=1}^{n} k_i \frac{\partial Fli}{\partial C} \Delta C$$

Stellt die Unterstation U1 fest, dass sich der Gesamtzustandswert Fg gegenüber dem vorherigen Gesamtzustandswert Fl ohne Durchführung der Veränderungsaktion verschlechtert, so wird sie die Durchführung der Veränderungsaktion unterlassen und andere Maßnahmen prüfen, die eine Verbesserung des Gesamtzustandswerts des Energieverteilnetzes 10 bewirken würden oder alternativ den Optimierungsmodus beenden.

Stellt die Unterstation U1 hingegen fest, dass eine teilweise Neuzuordnung des Teilabschnitts TA1 zum Teilnetz TN2 für den Gesamtzustand des Energieverteilnetzes 10 von Vorteil ist, weil der Gesamtzustandswert Fg größer als der Gesamtzustandswert Fl ist, so wird sie die Umsetzung der Veränderungsaktion veranlassen, wie dies oben bereits beispielhaft erläutert wurde. Dabei wird sie eine Energieverteilung auf die beiden Unterstationen U1 und U2 vorzugsweise derart wählen bzw. den Wert ΔC derart einstellen, dass Fg maximal bzw. optimal wird.

Zur Bildung der unterstationsindividuellen Sensibilitätswerte ∂Fli/∂C werden von der Unterstation U1 bis U4 vorzugsweise Last- und/oder Topologiedaten herangezogen, die sich auf das jeweils versorgte Teilnetz oder das gesamte Energieverteilnetz beziehen. Die Last- und/oder Topologiedaten erhalten die Unterstation U1 beispielsweise von der Zentraleinrichtung Z.

Um die oben beschriebene Funktionalität der Unterstationen U1 bis U4 in einfacher Weise realisieren zu können, werden diese vorzugsweise mit Recheneinrichtungen R ausgestattet, die derart programmiert sind, dass sie wie beschrieben arbeiten können. Konkret wird die Recheneinrichtung R der Unterstation U1 vorzugsweise derart programmiert sein, dass sie absolute unterstationsindividuelle Sensibilitätswerte und/oder auf den Umfang der Veränderung bezogene unterstationsindividuelle Sensibilitätswerte anderer Unterstationen erfragen und auswerten kann und nach Auswertung der empfangenen unterstationsindividuellen Sensibilitätswerte eine Veränderung des Energieverteilnetzes veranlassen oder zumindest auslösen kann, wenn eine solche nach Auswertung der unterstationsindividuellen Sensibilitätswerte als vorteilhaft erkannt wurde.

Die Recheneinrichtungen R der Unterstationen U1 bis U4 sind vorzugsweise derart ausgestaltet, dass sie im Falle eines eingehenden Anfragesignals A bzw. A' in der Lage sind, jeweils einen absoluten oder relativen (bzw. auf das Maß der Veränderung bezogenen) unterstationsindividuellen Sensibilitätswert zu bilden, der den Einfluss einer geplanten Veränderung auf den lokalen Betriebszustand in dem jeweiligen der Unterstation zugeordneten Teilnetz angibt.

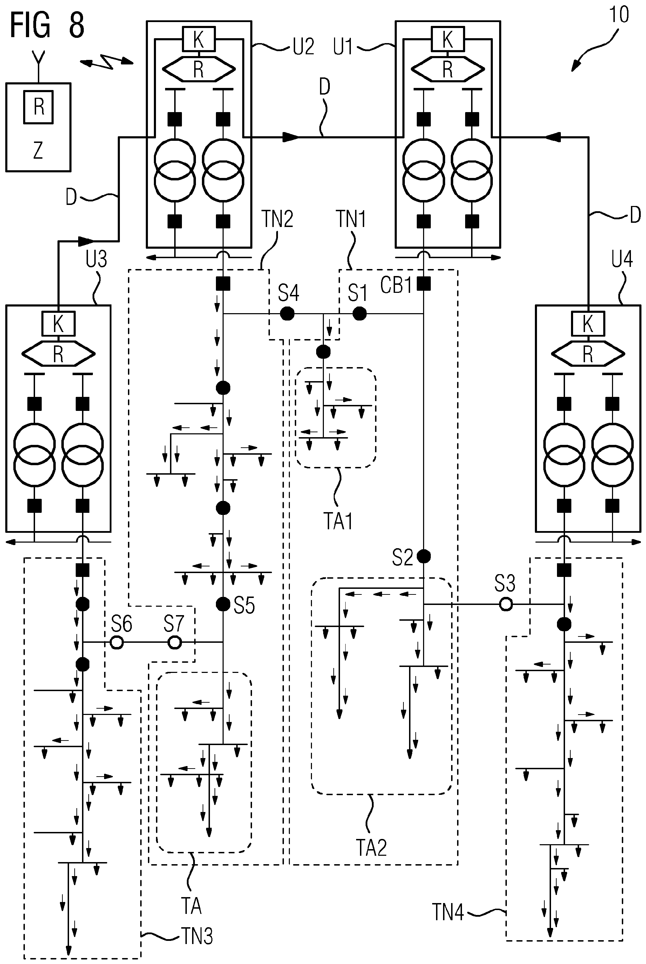

Die Zentraleinrichtung Z ist vorzugsweise ebenfalls mit einer Recheneinrichtung R (vgl. Figur 8) ausgestattet. Diese ist vorzugsweise derart programmiert, dass sie nach Empfang einer Anfrage einer Unterstation anhand weiterer, der anfragenden Unterstation nicht zur Verfügung stehender Daten prüft, ob eine in der Anfrage definierte Veränderungsaktion ausgeführt werden soll und ein Bestätigungssignal an die anfragende Unterstation schickt, falls dies der Fall ist.

Die Unterstationen U2 bis U4 werden vorzugsweise genauso arbeiten wie die Unterstation U1 und jeweils im Rahmen eines Optimierungsmodus ebenfalls versuchen, den Betriebszustand des gesamten Energieverteilnetzes insgesamt zu verbessern. Die Unterstationen U1 bis U4 werden die Optimierungszyklen vorzugsweise zeitlich nacheinander (z. B. getriggert durch die Zentraleinrichtung Z) durchlaufen, um eine Kollision der Optimierungsbemühungen zu vermeiden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden.

Bezugszeichenliste

| 10 | Energieverteilnetz |
|---|---|
| A | Anfragesignal |
| A' | Anfragesignal |
| B | Anfrage |
| ΔC | Maß der Veränderung |
| CB1 | Schalter |
| D | Datenleitung |
| E | Bestätigungssignal |
| Fg | Gesamtzustandswert |
| Fl | Gesamtzustandswert |
| K | Kommunikationseinrichtung |
| Q1 | Sensibilitätswert |
| Q2 | Sensibilitätswert |
| Q3 | Sensibilitätswert |
| Q4 | Sensibilitätswert |
| R | Recheneinrichtung |
| S1-S7 | Schalter |
| TA1 | Teilabschnitt |
| TA2 | Teilabschnitt |
| TN1 | Teilnetz |
| TN2 | Teilnetz |
| TN3 | Teilnetz |
| TN4 | Teilnetz |
| U1 | Unterstation |
| U2 | Unterstation |
| U3 | Unterstation |
| U4 | Unterstation |
| V | Veränderungswert |
| Z | Zentraleinrichtung |

| $\partial Fl1/\partial C$ | unterstationsindividueller Sensibilitätswert |
| $\partial Fl2/\partial C$ | unterstationsindividueller Sensibilitätswert |
| $\partial Fl3/\partial C$ | unterstationsindividueller Sensibilitätswert |
| $\partial Fl4/\partial C$ | unterstationsindividueller Sensibilitätswert |

**Patentansprüche**

1. Verfahren zum Betreiben eines Energieverteilnetzes (10), bei dem Energie durch Unterstationen (U1, U2, U3, U4) hindurch in Teilnetze (TN1, TN2, TN3, TN4) gespeist wird und die Verteilung der Energie mit einer den Unterstationen (U1, U2, U3, U4) übergeordneten Zentraleinrichtung (Z) überwacht wird, mindestens eine der Unterstationen (U1, U2, U3, U4) in einem Optimierungsmodus betrieben wird, in dem sie zur Optimierung des Betriebs des gesamten Energieverteilnetzes (10) eine Veränderungsaktion, die die Unterstation (U1, U2, U3, U4) in dem ihr zugeordneten Teilnetz (TN1, TN2, TN3, TN4) vornehmen könnte, auf deren Wirkung auf den Betriebszustand des gesamten Energieverteilnetzes (10) untersucht,

**dadurch gekennzeichnet, dass**

- die im Optimierungsmodus betriebene Unterstation (U1, U2, U3, U4) an die von der Veränderungsaktion betroffen oder an alle Unterstationen (U1, U2, U3, U4) jeweils ein Anfragesignal (A) übersendet, das die Veränderungsaktion definiert, und

- die von der Veränderungsaktion betroffen oder alle Unterstationen (U1, U2, U3, U4) prüfen, welchen Einfluss die Veränderungsaktion auf das jeweils der Unterstation (U1, U2, U3, U4) zugeordnete Teilnetz (TN1, TN2, TN3, TN4) hätte, und

- die im Optimierungsmodus betriebene Unterstation (U1, U2, U3, U4) von der oder den von der Veränderungsaktion betroffen oder von allen Unterstationen (U1, U2, U3, U4) jeweils einen unterstationsindividuellen Sensibilitätswert (Q1, Q2, Q3, Q4, $\partial Fl1/\partial C$, $\partial Fl2/\partial C$, $\partial Fl3/\partial C$, $\partial Fl4/\partial C$) empfängt, der die Änderung des lokalen Betriebszustands in dem der jeweiligen anderen Unterstation (U1, U2, U3, U4) zugeordneten Teilnetz (TN1, TN2, TN3, TN4) angibt, falls die Veränderungsaktion in dem Teilnetz (TN1, TN2, TN3, TN4) der im Optimierungsmodus betriebenen Unterstation (U1, U2, U3, U4) ausgeführt werden würde, und

die im Optimierungsmodus betriebene Unterstation (U1, U2, U3, U4) anhand der empfangenen Sensibilitätswerte (Q1, Q2, Q3, Q4, $\partial Fl1/\partial C$, $\partial Fl2/\partial C$, $\partial Fl3/\partial C$, $\partial Fl4/\partial C$) prüft, ob die Veränderungsaktion für das gesamte Energieverteilnetz (10) zu einer Verbesserung des Betriebszustandes führen würde.

2. Verfahren nach Anspruch 1, **dadurch gekennzeichnet, dass** die im Optimierungsmodus betriebene Unterstation (U1, U2, U3, U4) die unterstationsindividuellen Sensibilitätswerte ($\partial Fl1/\partial C$, $\partial Fl2/\partial C$, $\partial Fl3/\partial C$, $\partial Fl4/\partial C$) und einen ei-

genen Sensibilitätswert ($\partial Fl1/\partial C$, $\partial Fl2/\partial C$, $\partial Fl3/\partial C$, $\partial Fl4/\partial C$), der den Einfluss der Veränderungsaktion auf das eigene Teilnetz (TN1, TN2, TN3, TN4) beschreibt, unter Bildung eines Veränderungswertes (V) aufsummiert gemäß:

$$V = \sum_{i=1}^{n} k_i \frac{\partial Fli}{\partial C} \Delta C$$

wobei n die Anzahl der Unterstationen, $\delta Fli/\delta C$ einen auf das Maß der Veränderung bezogenen unterstationsindividuellen Sensibilitätswert der i-ten Unterstation, $\Delta C$ das Maß der Veränderung der Veränderungsaktion und ki einen unterstationsindividuellen Gewichtungswert beschreibt, der den Einfluss der i-ten Unterstation auf den Gesamtzustandswert angibt.

3. Verfahren nach einem der voranstehenden Ansprüche,
   **dadurch gekennzeichnet, dass**

   - die im Optimierungsmodus betriebene Unterstation (U1, U2, U3, U4) die unterstationsindividuellen Sensibilitätswerte ($\partial Fl1/\partial C$, $\partial Fl2/\partial C$, $\partial Fl3/\partial C$, $\partial Fl4/\partial C$) und einen eigenen Sensibilitätswert (Q1, Q2, Q3, Q4), der den Einfluss der Veränderungsaktion auf das eigene Teilnetz (TN1, TN2, TN3, TN4) beschreibt, zur Bildung eines den Betriebszustand des gesamten Energieverteilnetzes (10) beschreibenden Gesamtzustandswerts heranzieht gemäß:

$$Fg = Fl + \sum_{i=1}^{n} k_i \frac{\partial Fli}{\partial C} \Delta C$$

   wobei Fg den Gesamtzustandswert nach der Durchführung der Veränderungsaktion, Fl den Gesamtzustandswert vor der Durchführung der Veränderungsaktion, n die Anzahl der Unterstationen, $\delta Fli/\delta C$ den unterstationsindividuellen Sensibilitätswert der i-ten Unterstation, und ki einen unterstationsindividuellen Gewichtungswert beschreibt, der den Einfluss der i-ten Unterstation auf den Gesamtzustandswert angibt.

4. Verfahren nach einem der voranstehenden Ansprüche,
   **dadurch gekennzeichnet, dass** der unterstationsindividuelle Sensibilitätswert ($\partial Fl1/\partial C$, $\partial Fl2/\partial C$, $\partial Fl3/\partial C$, $\partial Fl4/\partial C$) ein Wert ist,

   - der das Verhältnis zwischen der Energie, die von den an das Teilnetz (TN1, TN2, TN3, TN4) der jeweiligen Unterstation (U1, U2, U3, U4) angeschlossenen Verbrauchern verbraucht wird, und der im jeweiligen Teilnetz (TN1, TN2, TN3, TN4) verlorenen Energie angibt oder
   - der die Schwankungsbreite der Spannung in dem der jeweiligen Unterstation (U1, U2, U3, U4) zugeordneten Teilnetz (TN1, TN2, TN3, TN4) angibt oder
   - der die Schwankungsbreite der Frequenz der Spannung in dem der jeweiligen Unterstation (U1, U2, U3, U4) zugeordneten Teilnetz (TN1, TN2, TN3, TN4) angibt.

5. Verfahren nach einem der voranstehenden Ansprüche,
   **dadurch gekennzeichnet, dass** die im Optimierungsmodus betriebene Unterstation (U1, U2, U3, U4) die Veränderungsaktion ausführt, falls sie feststellt, dass die Veränderungsaktion für das gesamte Energieverteilnetz (10) zu einer Verbesserung des Betriebszustandes führt.

6. Verfahren nach einem der voranstehenden Ansprüche 1-4,
   **dadurch gekennzeichnet, dass** die im Optimierungsmodus betriebene Unterstation (U1, U2, U3, U4) - falls sie feststellt, dass die Veränderungsaktion für das gesamte Energieverteilnetz (10) zu einer Verbesserung des Betriebszustandes führen würde - eine Anfrage an die übergeordnete Zentraleinrichtung (Z) sendet, mit der angefragt wird, ob die Veränderungsaktion ausgeführt werden soll.

7. Verfahren nach Anspruch 6,
   **dadurch gekennzeichnet, dass** nach Empfang der Anfrage die übergeordnete Zentraleinrichtung (Z) anhand weiterer, der anfragenden Unterstation (U1, U2, U3, U4) nicht zur Verfügung stehender Daten prüft, ob die Veränderungsaktion ausgeführt werden soll, und ein Bestätigungssignal (E) an die anfragende Unterstation (U1, U2, U3, U4) schickt, falls dies der Fall ist.

8. Verfahren nach einem der voranstehenden Ansprüche,
   **dadurch gekennzeichnet, dass**

   - die im Optimierungsmodus betriebene Unterstation (U1, U2, U3, U4) zu der oder den von der Veränderungsaktion betroffenen oder zu allen Unterstationen(U1, U2, U3, U4) ein Anfragesignal übersendet, mit dem die Veränderungsaktion, die in dem Teilnetz (TN1, TN2, TN3, TN4) der im Optimierungsmodus betriebenen Unterstation (U1, U2, U3, U4) ausgeführt werden soll, definiert wird,
   - die Unterstationen (U1, U2, U3, U4) jeweils prüfen, welchen Einfluss die geplante Veränderungsaktion auf das eigene Teilnetz (TN1, TN2, TN3, TN4) haben würde, einen diesen Einfluss beschreibenden unterstationsindividuellen Sensibilitätswert (Q1, Q2, Q3, Q4, $\partial Fl1/\partial C$, $\partial Fl2/\partial C$, $\partial Fl3/\partial C$, $\partial Fl4/\partial C$) erzeugen und den unterstationsindividuellen Sensibilitätswert (Q1, Q2, Q3, Q4, $\partial Fl1/\partial C$, $\partial Fl2/\partial C$, $\partial Fl3/\partial C$, $\partial Fl4/\partial C$) an die im Optimierungsmodus betriebene Unterstation (U1, U2, U3, U4) senden, und

- die im Optimierungsmodus betriebene Unterstation (U1, U2, U3, U4) die unterstationsindividuellen Sensibilitätswerte (Q1, Q2, Q3, Q4, $\partial Fl1/\partial C$, $\partial Fl2/\partial C$, $\partial Fl3/\partial C$, $\partial Fl4/\partial C$) von den übrigen Unterstationen (U1, U2, U3, U4) empfängt und mit diesen einen den Betriebszustand des gesamten Energieverteilnetzes (10) beschreibenden Gesamtzustandswert erzeugt.

9. Verfahren nach einem der voranstehenden Ansprüche,
**dadurch gekennzeichnet, dass** als Gesamtzustandswert des gesamten Energieverteilnetzes (10) ein Wert gebildet wird,

- der das Verhältnis zwischen der von den an das Energieverteilnetz (10) angeschlossenen Verbrauchern verbrauchten Energie und der im Energieverteilnetz (10) verlorenen Energie angibt oder
- der die Schwankungsbreite der Spannung im Energieverteilnetz (10) angibt oder
- der die Schwankungsbreite der Frequenz der Spannung im Energieverteilnetz (10) angibt.

10. Energieverteilnetz (10) mit mindestens zwei Unterstationen (U1, U2, U3, U4), die jeweils ein Teilnetz (TN1, TN2, TN3, TN4) des Energieverteilnetzes (10) mit Energie versorgen können, und mit einer den Unterstationen (U1, U2, U3, U4) übergeordneten Zentraleinrichtung (Z),
**dadurch gekennzeichnet, dass** mindestens eine der Unterstationen (U1, U2, U3, U4) dazu ausgebildet ist, in einem Optimierungsmodus betrieben zu werden, in dem sie zur Optimierung des Betriebs des gesamten Energieverteilnetzes (10) eine Veränderungsaktion, die die Unterstation (U1, U2, U3, U4) in dem ihr zugeordneten Teilnetz (TN1, TN2, TN3, TN4) vornehmen könnte, auf deren Wirkung auf den Betriebszustand des gesamten Energieverteilnetzes (10) untersucht wird, indem sie

- an die von der Veränderungsaktion betroffenen oder an alle Unterstationen (U1, U2, U3, U4) jeweils ein Anfragesignal (A) übersendet, das die Veränderungsaktion definiert, und
- die von der Veränderungsaktion betroffenen oder alle Unterstationen (U1, U2, U3, U4) ausgebildet sind, um zu prüfen, welchen Einfluss die Veränderungsaktion auf das jeweils der Unterstation (U1, U2, U3, U4) zugeordnete Teilnetz (TN1, TN2, TN3, TN4) hätte, und
- die in dem Optimierungsmodus betreibbare Unterstation (U1, U2, U3, U4) ausgebildet ist, von allen oder zumindest von der oder den von der Veränderungsaktion betroffenen Unterstationen (U1, U2, U3, U4) jeweils einen unterstationsindividuellen Sensibilitätswert (Q1, Q2, Q3, Q4, $\partial Fl1/\partial C$, $\partial Fl2/\partial C$, $\partial Fl3/\partial C$, $\partial Fl4/\partial C$) zu empfangen, der die Änderung des lokalen Betriebszustands in dem der jeweiligen anderen Unterstation (U1, U2, U3, U4) zugeordneten Teilnetz (TN1, TN2, TN3, TN4) angibt, falls die Veränderungsaktion in dem Teilnetz (TN1, TN2, TN3, TN4) der im Optimierungsmodus betriebenen Unterstation (U1, U2, U3, U4) ausgeführt werden würde, und
- anhand der empfangenen Sensibilitätswerte (Q1, Q2, Q3, Q4, $\partial Fl1/\partial C$, $\partial Fl2/\partial C$, $\partial Fl3/\partial C$, $\partial Fl4/\partial C$) prüft, ob die Veränderungsaktion für das gesamte Energieverteilnetz (10) zu einer Verbesserung des Betriebszustandes führen würde.

11. Unterstation (U1, U2, U3, U4) eines Energieverteilnetzes (10) nach Anspruch 10,
**dadurch gekennzeichnet, dass** die Unterstation (U1, U2, U3, U4) eine Recheneinrichtung (R) aufweist, die derart programmiert ist, dass die Unterstation (U1, U2, U3, U4) in einem Optimierungsmodus betrieben werden kann, in dem sie zur Optimierung des Betriebs des gesamten Energieverteilnetzes (10) eine Veränderungsaktion, die die Unterstation (U1, U2, U3, U4) in dem ihr zugeordneten Teilnetz (TN1, TN2, TN3, TN4) vornehmen könnte, auf deren Wirkung auf den Betriebszustand des gesamten Energieverteilnetzes (10) untersucht, indem sie

- von allen oder zumindest von der oder den von der Veränderungsaktion betroffenen Unterstationen (U1, U2, U3, U4) jeweils einen unterstationsindividuellen Sensibilitätswert (Q1, Q2, Q3, Q4, $\partial Fl1/\partial C$, $\partial Fl2/\partial C$, $\partial Fl3/\partial C$, $\partial Fl4/\partial C$) empfängt, der die Änderung des lokalen Betriebszustands in dem der jeweiligen anderen Unterstation (U1, U2, U3, U4) zugeordneten Teilnetz (TN1, TN2, TN3, TN4) angibt, falls die Veränderungsaktion in dem Teilnetz (TN1, TN2, TN3, TN4) der im Optimierungsmodus betriebenen Unterstation (U1, U2, U3, U4) ausgeführt werden würde, und
- anhand der empfangenen Sensibilitätswerte (Q1, Q2, Q3, Q4, $\partial Fl1/\partial C$, $\partial Fl2/\partial C$, $\partial Fl3/\partial C$, $\partial Fl4/\partial C$) prüft, ob die Veränderungsaktion für das gesamte Energieverteilnetz (10) zu einer Verbesserung des Betriebszustandes führen würde.

12. Zentraleinrichtung (Z) eines Energieverteilnetzes (10) nach Anspruch 10,

**dadurch gekennzeichnet, dass** die Zentraleinrichtung (Z) eine Recheneinrichtung (R) aufweist, die derart programmiert ist, dass die Zentraleinrichtung (Z) nach Empfang einer Anfrage einer Unterstation (U1, U2, U3, U4) überprüft,

ob eine Veränderungsaktion, die für das gesamte Energieverteilnetz (10) zu einer Verbesserung des Betriebszustands führen würde, ausgeführt werden soll, und

anhand weiterer, der anfragenden Unterstation (U1, U2, U3, U4) nicht zur Verfügung stehender Daten prüft, ob eine in der Anfrage definierte Veränderungsaktion ausgeführt werden soll und ein Bestätigungssignal an die anfragende Unterstation (U1, U2, U3, U4) schickt, falls eine Ausführung erfolgen soll.

**Claims**

1. Method for operating a power distribution system (10) in which power is fed into subsystems (TN1, TN2, TN3, TN4) through substations (U1, U2, U3, U4) and the distribution of the power is monitored using a central device (Z) that is superordinate to the substations (U1, U2, U3, U4), at least one of the substations (U1, U2, U3, U4) is operated in an optimization mode in which it optimizes the operation of the whole power distribution system (10) by examining an alteration action, which the substation (U1, U2, U3, U4) could perform in the subsystem (TN1, TN2, TN3, TN4) associated therewith, for its effect on the operating state of the whole power distribution system (10),
**characterized in that**

- the substation (U1, U2, U3, U4) operated in optimization mode sends to the substations affected by the alteration action or to all substations (U1, U2, U3, U4) a respective enquiry signal (A) which defines the alteration action, and
- the substations affected by the alteration action or all substations (U1, U2, U3, U4) check what influence the alteration action would have on the respective subsystem (TN1, TN2, TN3, TN4) associated with the substation (U1, U2, U3, U4), and
- the substation (U1, U2, U3, U4) operated in optimization mode receives from the substation(s) affected by the alteration action or from all substations (U1, U2, U3, U4) a respective substation-individual sensitivity value (Q1, Q2, Q3, Q4, $\partial Fl1/\partial C$, $\partial Fl2/\partial C$, $\partial Fl3/\partial C$, $\partial Fl4/\partial C$) that indicates the change in the local operating state in the subsystem (TN1, TN2, TN3, TN4) associated with the respective other substation (U1, U2, U3, U4) if the alteration action were to be executed in the subsystem (TN1, TN2, TN3, TN4) of the substation (U1, U2, U3, U4) operated in optimization mode, and

the substation (U1, U2, U3, U4) operated in optimization mode uses the received sensitivity values (Q1, Q2, Q3, Q4, $\partial Fl1/\partial C$, $\partial Fl2/\partial C$, $\partial Fl3/\partial C$, $\partial Fl4/\partial C$) to check whether the alteration action would lead to an improvement in the operating state for the whole power distribution system (10).

2. Method according to Claim 1,
**characterized in that**
the substation (U1, U2, U3, U4) operated in optimization mode sums the substation-individual sensitivity values ($\partial Fl1/\partial C$, $\partial Fl2/\partial C$, $\partial Fl3/\partial C$, $\partial Fl4/\partial C$) and a sensitivity value ($\partial Fl1/\partial C$, $\partial Fl2/\partial C$, $\partial Fl3/\partial C$, $\partial Fl4/\partial C$) of its own, which describes the influence of the alteration action on its own subsystem (TN1, TN2, TN3, TN4), to form an alteration value (V), in accordance with:

$$V = \sum_{i=1}^{n} k_i \frac{\partial Fli}{\partial C} \Delta C$$

where n describes the number of substations, $\delta Fli/\delta C$ describes a substation-individual sensitivity value, which is based on the extent of the alteration, for the i-th substation, $\Delta C$ describes the extent of the alteration of the alteration action and ki describes a substation-individual weighting value that indicates the influence of the i-th substation on the total state value.

3. Method according to either of the preceding claims,
**characterized in that**

- the substation (U1, U2, U3, U4) operated in optimization mode uses the substation-individual sensitivity values ($\partial Fl1/\partial C$, $\partial Fl2/\partial C$, $\partial Fl3/\partial C$, $\partial Fl4/\partial C$) and a sensitivity value (Q1, Q2, Q3, Q4) of its own, which describes the influence of the alteration action on its own subsystem (TN1, TN2, TN3, TN4), to form a total state value that describes the operating state of the whole power distribution system (10), in accordance with:

$$Fg = Fl + \sum_{i=1}^{n} k_i \frac{\partial Fli}{\partial C} \Delta C$$

where Fg describes the total state value following performance of the alteration action, F1 describes the total state value before performance of the alteration action, n describes the number of substations, $\delta Fli/\delta C$ describes the substation-individual sensitivity value of the i-th substation, and ki describes a substation-individual weighting value that indicates the influence of the i-th substation on the total state value.

4. Method according to one of the preceding claims, **characterized in that** the substation-individual sensitivity value ($\partial Fl1/\partial C$, $\partial Fl2/\partial C$, $\partial Fl3/\partial C$, $\partial Fl4/\partial C$) is a value

   - that indicates the ratio between the power that is consumed by the loads connected to the subsystem (TN1, TN2, TN3, TN4) of the respective substation (U1, U2, U3, U4) and the power lost in the respective subsystem (TN1, TN2, TN3, TN4) or
   - that indicates the range of variation in the voltage in the subsystem (TN1, TN2, TN3, TN4) associated with the respective substation (U1, U2, U3, U4) or
   - that indicates the range of variation in the frequency of the voltage in the subsystem (TN1, TN2, TN3, TN4) associated with the respective substation (U1, U2, U3, U4).

5. Method according to one of the preceding claims, **characterized in that** the substation (U1, U2, U3, U4) operated in optimization mode executes the alteration action if it establishes that the alteration action leads to an improvement in the operating state for the whole power distribution system (10).

6. Method according to one of the preceding Claims 1-4, **characterized in that** the substation (U1, U2, U3, U4) operated in optimization mode - if it establishes that the alteration action would lead to an improvement in the operating state for the whole power distribution system (10) - sends an enquiry to the superordinate central device (Z) that is used to enquire whether the alteration action is intended to be executed.

7. Method according to Claim 6, **characterized in that** following reception of the enquiry the superordinate central device (Z) uses further data, which are not available to enquiring substation (U1, U2, U3, U4), to check whether the alteration action is intended to be executed, and sends a confirmation signal (E) to the enquiring substation (U1, U2, U3, U4) if this is the case.

8. Method according to one of the preceding claims, **characterized in that**

   - the substation (U1, U2, U3, U4) operated in optimization mode sends to the substation(s) affected by the alteration action or to all substations (U1, U2, U3, U4) an enquiry signal that is used to define the alteration action that is intended to be executed in the subsystem (TN1, TN2, TN3, TN4) of the substation (U1, U2, U3, U4) operated in optimization mode,
   - the substations (U1, U2, U3, U4) each check what influence the planned alteration action would have on their own subsystem (TN1, TN2, TN3, TN4), produce a substation-individual sensitivity value (Q1, Q2, Q3, Q4, $\partial Fl1/\partial C$, $\partial Fl2/\partial C$, $\partial Fl3/\partial C$, $\partial Fl4/\partial C$) that describes this influence and send the substation-individual sensitivity value (Q1, Q2, Q3, Q4, $\partial Fl1/\partial C$, $\partial Fl2/\partial C$, $\partial Fl3/\partial C$, $\partial Fl4/\partial C$) to the substation (U1, U2, U3, U4) operated in optimization mode, and
   - the substation (U1, U2, U3, U4) operated in optimization mode receives the substation-individual sensitivity values (Q1, Q2, Q3, Q4, $\partial Fl1/\partial C$, $\partial Fl2/\partial C$, $\partial Fl3/\partial C$, $\partial Fl4/\partial C$) from the remainder of the substations (U1, U2, U3, U4) and uses them to produce a total state value that describes the operating state of the whole power distribution system (10).

9. Method according to one of the preceding claims, **characterized in that** the total state value formed for the whole power distribution system (10) is a value

   - that indicates the ratio between the power consumed by the loads connected to the power distribution system (10) and the power lost in the power distribution system (10) or
   - that indicates the range of variation in the voltage in the power distribution system (10) or
   - that indicates the range of variation in the frequency of the voltage in the power distribution system (10).

10. Power distribution system (10) having at least two substations (U1, U2, U3, U4) that can each supply a subsystem (TN1, TN2, TN3, TN4) of the power distribution system (10) with power and having a central device (Z) that is superordinate to the substations (U1, U2, U3, U4), **characterized in that** at least one of the substations (U1, U2, U3, U4) is configured to be operated in an optimization mode in which it could optimize the operation of the whole power distribution system (10) by examining an alteration action, which the substation (U1, U2, U3, U4) could perform in the subsystem (TN1, TN2, TN3, TN4) associated therewith, for its effect on the operating state of the whole power distribution system (10) by virtue of its

   - sending to the substations affected by the alteration action or to all substations (U1, U2, U3, U4) a respective enquiry signal (A) which defines the alteration action, and
- the substations affected by the alteration action or all substations (U1, U2, U3, U4) being configured to check what influence the alteration action would have on the respective subsystem (TN1, TN2, TN3, TN4) associated with the substation (U1, U2, U3, U4), and
- the substation (U1, U2, U3, U4) operable in optimization mode being configured to receive from all or at least from the substation(s) (U1, U2, U3, U4) affected by the alteration action a respective substation-individual sensitivity value (Q1, Q2, Q3, Q4, $\partial Fl1/\partial C$, $\partial Fl2/\partial C$, $\partial Fl3/\partial C$, $\partial Fl4/\partial C$) that indicates the change in the local operating state in the subsystem (TN1, TN2, TN3, TN4) associated with the respective other substation (U1, U2, U3, U4) if the alteration action were to be executed in the subsystem (TN1, TN2, TN3, TN4) of the substation (U1, U2, U3, U4) operated in optimization mode, and
- using the received sensitivity values (Q1, Q2, Q3, Q4, $\partial Fl1/\partial C$, $\partial Fl2/\partial C$, $\partial Fl3/\partial C$, $\partial Fl4/\partial C$) to check whether the alteration action would lead to an improvement in the operating state for the whole power distribution system (10).

11. Substation (U1, U2, U3, U4) of a power distribution system (10) according to Claim 10,
**characterized in that**
the substation (U1, U2, U3, U4) has a computation device (R) that is programmed such that the substation (U1, U2, U3, U4) can be operated in an optimization mode in which it optimizes the operation of the whole power distribution system (10) by examining an alteration action, which the substation (U1, U2, U3, U4) could perform in the subsystem (TN1, TN2, TN3, TN4) associated therewith, for its effect on the operating state of the whole power distribution system (10) by

- receiving from all or at least from the substation(s) (U1, U2, U3, U4) affected by the alteration action a respective substation-individual sensitivity value (Q1, Q2, Q3, Q4, $\partial Fl1/\partial C$, $\partial Fl2/\partial C$, $\partial Fl3/\partial C$, $\partial Fl4/\partial C$) that indicates the change in the local operating state in the subsystem (TN1, TN2, TN3, TN4) associated with the respective other substation (U1, U2, U3, U4) if the alteration action were to be executed in the subsystem (TN1, TN2, TN3, TN4) of the substation (U1, U2, U3, U4) operated in optimization mode, and
- using the received sensitivity values (Q1, Q2, Q3, Q4, $\partial Fl1/\partial C$, $\partial Fl2/\partial C$, $\partial Fl3/\partial C$, $\partial Fl4/\partial C$) to check whether the alteration action would lead to an improvement in the operating state for the whole power distribution system (10).

12. Central device (Z) of a power distribution system (10) according to Claim 10,
**characterized in that**
the central device (Z) has a computation device (R) that is programmed such that the central device (Z), following reception of an enquiry from a substation (U1, U2, U3, U4), checks whether an alteration action which would lead to an improvement in the operating state for the whole power distribution system (10) is intended to be executed, and uses further data, which are not available to the enquiring substation (U1, U2, U3, U4), to check whether an alteration action defined in the enquiry is intended to be executed, and sends a confirmation signal to the enquiring substation (U1, U2, U3, U4) if execution is intended to take place.

## Revendications

1. Procédé pour faire fonctionner un réseau (10) de distribution d'énergie,
dans lequel on envoie de l'énergie par des sous-stations (U1, U2, U3, U4) dans des réseaux (TN1, TN2, TN3, TN4) partiels et on contrôle la répartition de l'énergie par un dispositif (Z) central supérieur hiérarchiquement aux sous-stations (U1, U2, U3, U4), au moins l'une des sous-stations (U1, U2, U3, U4) fonctionnant suivant un mode d'optimisation, dans lequel, pour optimiser le fonctionnement de tout le réseau (10) de distribution d'énergie, elle recherche l'effet sur l'état de fonctionnement de tout le réseau (10) de distribution d'énergie d'une action de modification que la sous-station (U1, U2, U3, U4) pourrait effectuer dans le réseau (TN1, TN2, TN3, TN4) partiel, qui lui est associé,
**caractérisé en ce que**

- la sous-station (U1, U2, U3, U4), fonctionnant dans le mode d'optimisation, transmet aux sous-stations (U1, U2, U3, U4) concernées par l'action de modification ou à toutes les sous-stations (U1, U2, U3, U4) respectivement un signal (A) de demande qui définit l'action de modification, et
- les sous-stations (U1, U2, U3, U4) concernées par l'action de modification ou toutes les sous-stations (U1, U2, U3, U4) contrôlent l'influence que l'action de modification aurait sur le réseau (TN1, TN2, TN3, TN4) partiel associé respectivement à la sous-station (U1, U2, U3, U4), et
- la sous-station (U1, U2, U3, U4) fonctionnant dans le mode d'optimisation reçoit des sous-stations (U1, U2, U3, U4) concernées par l'action de modification ou de toutes les sous-stations (U1, u2, U3, U4) respectivement une valeur (Q1, Q2, Q3, Q4, $\partial Fl1/\partial C$, $\partial Fl2/\partial C$, $\partial Fl3/\partial C$, $\partial Fl4/\partial C$) de sensibilité individuelle à la sous-station, qui indique la modification de l'état de fonctionnement local dans le réseau (TN1, TN2, TN3, TN4) partiel associé respectivement aux autres sous-stations (U1, U2, U3, U4), si l'action de modification était réalisée dans le réseau (TN1, TN2, TN3, TN4) partiel de la sous-station (U1, U2, U3, U4) fonctionnant dans le mode d'optimisation, et

la sous-station (U1, U3, U4) fonctionnant dans le mode d'optimisation contrôle, à l'aide des valeurs (Q1, Q2, Q3, Q4, $\partial Fl1/\partial C$, $\partial Fl2/\partial C$, $\partial Fl3/\partial C$, $\partial Fl4/\partial C$) de sensibilité reçue, si l'action de modification aurait donné une amélioration de l'état de fonctionnement de tout le réseau (10) de distribution d'énergie.

2. Procédé suivant la revendication 1,
   **caractérisé en ce que**
   la sous-station (U1, U2, U3, U4) fonctionnant dans le mode d'optimisation somme les valeurs ($\partial Fl1/\partial C$, $\partial Fl2/\partial C$, $\partial Fl3/\partial C$, $\partial Fl4/\partial C$) de sensibilité individuelles à la sous-station et une valeur ($\partial Fl1/\partial C$, $\partial Fl2/\partial C$, $\partial Fl3/\partial C$, $\partial Fl4/\partial C$) de sensibilité propre, qui décrit l'influence d'une action de modification sur le réseau (TN1, TN2, TN3, TN4) partiel propre, avec formation d'une valeur (V) de modification suivant :

$$V = \sum_{i=l}^{n} k_i \; \frac{\partial Fli}{\partial C} \Delta C$$

dans laquelle n est le nombre des sous-stations, $\delta Fli/\delta C$ est une valeur de sensibilité individuelle à la sous-station, rapportée à la mesure de la modification, de la ième sous-station, $\Delta C$ est la mesure de la modification de l'action de modification et $k_i$ est une valeur de pondération individuelle à la sous-station, qui indique l'influence de la ième sous-station sur la valeur d'état global.

3. Procédé suivant l'une des revendications précédentes,
   **caractérisé en ce que**

   - la sous-station (U1, U2, U3, U4) fonctionnant dans le mode d'optimisation tire parti des valeurs ($\partial Fl1/\partial C$, $\partial Fl2/\partial C$, $\partial Fl3/\partial C$, $\partial Fl4/\partial C$) de sensibilité individuelles à la sous-station et d'une valeur (Q1, Q2, Q3, Q4) de sensibilité propre, qui décrit l'influence de l'action de modification sur le réseau (TN1, TN2, TN3, TN4) partiel propre, avec formation d'une valeur d'état global décrivant l'état de tout le réseau (10) de distribution d'énergie suivant :

$$Fg = Fl + \sum_{i=l}^{n} k_i \; \frac{\partial Fli}{\partial C} \Delta C$$

dans laquelle Fg est la valeur d'état global après avoir effectué l'action de modification, F1 est la valeur d'état global avant d'avoir effectué l'action de modification, n est le nombre des sous-stations, $\delta Fli/\delta C$ est la valeur de sensibilité, individuelle à la sous-station, de la ième sous-station, et $k_i$ est une valeur de pondération individuelle à la sous-station, qui indique l'influence de la ième sous-station sur la valeur d'état global.

4. Procédé suivant l'une des revendications précédentes
   **caractérisé en ce que**
   la valeur ($\partial Fl1/\partial C$, $\partial Fl2/\partial C$, $\partial Fl3/\partial C$, $\partial Fl4/\partial C$) de sensibilité individuelle à la sous-station est une valeur,

   - qui indique le rapport entre l'énergie consommée par les consommateurs raccordés au réseau (TN1, TN2, TN3, TN4) partiel de la sous-station (U1, U2, U3, U4) respective et l'énergie perdue dans le réseau (TN1, TN2, TN3, TN4) partiel respectif ou
   - l'amplitude de fluctuation de la tension dans le réseau (TN1, TN2, TN3, TN4) partiel associé à la sous-station (U1, U2, U3, U4) respective ou
   - qui indique l'amplitude de fluctuation de la fréquence de la tension dans le réseau (TN1, TN2, TN3, TN4) partiel associé à la sous-station (U1, U2, U3, U4) respective.

5. Procédé suivant l'une des revendications précédentes,
   **caractérisé en ce que**
   la sous-station (U1, U2, U3, U4) fonctionnant dans le mode d'optimisation exécute l'action de modification, si elle constate que l'action de modification améliore l'état de fonctionnement de tout le réseau (10) de distribution d'énergie.

6. Procédé suivant l'une des revendications 1 à 4 précédentes,
   **caractérisé en ce que**
   la sous-station (U1, U2, U3, U4) fonctionnant dans le mode d'optimisation envoie - si elle constate que l'action de modification donnerait une amélioration de l'état de fonctionnement de tout le réseau (10) de distribution d'énergie - une demande au dispositif (Z) central supérieur hiérarchiquement, par laquelle il est demandé si l'action de modification doit être effectuée.

7. Procédé suivant la revendication 6,
   **caractérisé en ce qu'**après réception de la demande, le dispositif (Z) central supérieur hiérarchiquement contrôle, à l'aide d'autres données qui ne sont pas à la disposition de la sous-station (U1, U2, U3, U4) demandeuse, si l'action de modification doit être effectuée, et envoie un signal (E) de confirmation à la sous-station (U1, U2, U3, U4) demandeuse, si cela est le cas.

8. Procédé suivant l'une des revendications précédentes,
**caractérisé en ce que**

   - la sous-station (U1, U2, U3, U4) fonctionnant dans le mode d'optimisation envoie à la sous-station (U1, U2, U3, U4) concernée par l'action de modification ou à toutes les sous-stations (U1, U2, U3, U4) un signal de demande, par lequel l'action de modification, qui doit être effectuée dans le réseau (TN1, TN2, TN3, TN4) partiel de la sous-station (U1, U2, U3, U4) concernée par le mode d'optimisation, est définie,
   - les sous-stations (U1, U2, U3, U4) contrôlent, respectivement, l'influence que l'action de modification prévue aurait sur le réseau (TN1, TN2, TN3, TN4) partiel propre et produisent une valeur (Q1, Q2, Q3, Q4, $\partial Fl_1/\partial C$, $\partial Fl_2/\partial C$, $\partial Fl_3/\partial C$, $\partial Fl_4/\partial C$) de sensibilité individuelle à la sous-station décrivant cette influence et envoie la valeur (Q1, Q2, Q3, Q4, $\partial Fl_1/\partial C$, $\partial Fl_2/\partial C$, $\partial Fl_3/\partial C$, $\partial Fl_4/\partial C$) de sensibilité individuelle à la sous-station à la sous-station (U1, U2, U3, U4) fonctionnant dans le mode d'optimisation, et
   - la sous-station (U1, U2, U3, U4) fonctionnant dans le mode d'optimisation reçoit les valeurs (Q1, Q2, Q3, Q4, $\partial Fl_1/\partial C$, $\partial Fl_2/\partial C$, $\partial Fl_3/\partial C$, $\partial Fl_4/\partial C$) de sensibilité, individuelle à la sous-station, des autres sous-stations (U1, U2, U3, U4) et produit par celles-ci une valeur d'état global décrivant l'état de fonctionnement de tout le réseau (10) de distribution d'énergie.

9. Procédé suivant l'une des revendications précédentes,
**caractérisé en ce que**
l'on forme, comme valeur d'état global de tout le réseau (10) de distribution d'énergie, une valeur,

   - qui indique le rapport entre l'énergie consommée par les consommateurs raccordés au réseau (10) de distribution d'énergie et l'énergie perdue dans le réseau (10) de distribution d'énergie ou
   - qui indique l'amplitude de fluctuation de la tension dans le réseau (10) de distribution d'énergie ou
   - qui indique l'amplitude de fluctuation de la fréquence de la tension dans le réseau (10) de distribution d'énergie.

10. Réseau (10) de distribution d'énergie, comprenant au moins deux sous-stations (U1, U2, U3, U4), qui peuvent alimenter en énergie, respectivement, un réseau (TN1, TN2, TN3, TN4) partiel du réseau (10) de distribution d'énergie et comprenant un dispositif (Z) central supérieur hiérarchiquement aux sous-stations (U1, U2, U3, U4),
**caractérisé en ce que**
au moins l'une des sous-stations (U1, U2, U3, U4) est constituée de manière à fonctionner dans un mode d'optimisation, dans lequel, pour optimiser le fonctionnement de tout le réseau (10) de distribution d'énergie, elle recherche l'effet sur l'état de fonctionnement de tout le réseau (10) de distribution d'énergie d'une action de modification que la sous-station (U1, U2, U3, U4) pourrait effectuer dans le réseau (TN1, TN2, TN3, TN4) partiel qui lui est associé, par le fait qu'elle

   - envoie aux sous-stations (U1, U2, U3, U4) concernées par l'action de modification ou à toutes les sous-stations (U1, U2, U3, U4), respectivement, un signal (A) de demande, qui définit l'action de modification, et
   - les sous-stations (U1, U2, u3, u4) concernées par l'action de modification ou toutes les sous-stations (U1, U2, U3, U4) sont constituées pour contrôler l'influence que l'action de modification aurait sur, respectivement, le réseau (TN1, TN2, TN3, TN4) partiel associé à la sous-station (U1, U2, U3, U4), et
   - la sous-station (U1, U2, U3, U4) pouvant fonctionner dans le mode d'optimisation est constituée pour recevoir de toutes les sous-stations (U1, U2, U3, U4) ou au moins de la ou des sous-stations (U1, U2, U3, U4) concernées par l'action de modification, respectivement, une valeur (Q1, Q2, Q3, Q4, $\partial Fl_1/\partial C$, $\partial Fl_2/\partial C$, $\partial Fl_3/\partial C$, $\partial Fl_4/\partial C$) de sensibilité individuelle à la sous-station, qui indique la modification de l'état de fonctionnement local dans le réseau (TN1, TN2, TN3, TN4) partiel associé à, respectivement, l'autre sous-station (U1, U2, U3, U4), si l'action de modification était réalisée dans le sous-réseau (TN1, TN2, TN3, TN4) de la sous-station (U1, U2, U3, U4) fonctionnant dans le mode d'optimisation, et
   - contrôle, à l'aide des valeurs (Q1, Q2, Q3, Q4, $\partial Fl_1/\partial C$, $\partial Fl_2/\partial C$, $\partial Fl_3/\partial C$, $\partial Fl_4/\partial C$) de sensibilité reçues, si l'action de modification donnerait une amélioration de l'état de fonctionnement de tout le réseau (10) de distribution d'énergie.

11. Sous-station (U1, U2, U3, U4) d'un réseau (10) de distribution d'énergie suivant la revendication 10,
**caractérisée en ce que**
la sous-station (U1, U2, U3, U4) a un dispositif (R) d'ordinateur programmé de manière à ce que la sous-station (U1, U2, U3, U4) puisse fonctionner dans un mode d'optimisation, dans lequel, pour optimiser le fonctionnement de tout le réseau (10) de distribution d'énergie, l'effet sur l'état de fonctionnement de tout le réseau (10) de distribution d'énergie d'une action de modification qu'elle pourrait effectuer dans le réseau (TN1, TN2, TN3, TN4) partiel, qui lui est associé, par le fait que

- elle reçoit de toutes les sous-stations (U1, U2, U3, U4) ou d'au moins la où les sous-stations (U1, U2, U3, U4) concernées par l'action de modification, respectivement, une valeur (Q1, Q2, Q3, Q4, $\partial Fl1/\partial C$, $\partial Fl2/\partial C$, $\partial Fl3/\partial C$, $\partial Fl4/\partial C$) de sensibilité individuelle à la sous-station, qui indique la modification de l'état de fonctionnement local dans le réseau (TN1, TN2, TN3, TN4) partiel associé à, respectivement, l'autre sous-station (U1, U2, U3, U4), si l'action de modification était réalisée dans le réseau (TN1, TN2, TN3, TN4) partiel de la sous-station (U1, U2, U3, U4) fonctionnant dans le mode d'optimisation, et
- à l'aide des valeurs (Q1, Q2, Q3, Q4, $\partial Fl1/\partial C$, $\partial Fl2/\partial C$, $\partial Fl3/\partial C$, $\partial Fl4/\partial C$) de sensibilité reçues contrôle, si l'action de modification donnerait une amélioration de l'état de fonctionnement de tout le réseau (10) de distribution d'énergie.

12. Dispositif (Z) central d'un réseau (10) de distribution d'énergie suivant la revendication 10, **caractérisé en ce que**
le dispositif (Z) central a un dispositif (R) d'ordinateur programmé de manière à ce que le dispositif (Z) central contrôle, après réception d'une demande d'une sous-station (U1, U2, U3, U4),
si une action de modification, qui donnerait une amélioration de l'état de fonctionnement de tout le réseau (10) de distribution d'énergie, doit être effectuée, et à l'aide d'autres données non mises à disposition de la sous-station (U1, U2, U3, U4) demandeuse, contrôle si une action de modification définie dans la demande doit être effectuée et envoie un signal de confirmation à la sous-station (U1, U2, U3, U4) demandeuse, si une exécution doit être effectuée.

FIG 1

FIG 2

FIG 3

FIG 4

FIG 5

FIG 6

FIG 7

FIG 8

FIG 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012029720 A1
- US 2012143385 A1
- US 6018449 A